# EUROPEAN PATENT APPLICATION

(11) **EP 4 597 945 A1**
(43) Date of publication of application: **06.08.2025**
(21) Application number: 22959871.9
(22) Date of filing: 27.09.2022
(51) Int. Cl.: H04L 27/00, G01S 5/02, H04W 64/00

(54) **SIDELINK (SL) POSITIONING METHOD, AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/121899
(87) International publication number: WO 2024/065222

(57) **Abstract**

The embodiments of the present disclosure can be applied in the technical field of communications. Disclosed are a sidelink (SL) positioning method, and an apparatus. The method, which is executed by a terminal, comprises: in response to there being no SL positioning reference signal (PRS) that is required to be received detected during the process of SL positioning, sending indication information to a base station, or sending indication information to a location management function (LMF) network element, or sending indication information to a second terminal. In this way, a first terminal can send indication information when an SL PRS cannot be detected, so as to prevent an SL positioning flow from being unable to proceed, and prevent a positioning failure.

## Description

### TECHNICAL FIELD

The present disclosure relates to a field of communication technology, and specifically to a method and an apparatus for sidelink (SL) positioning.

### BACKGROUND

In the related art, in a sidelink (SL) positioning procedure, a terminal may not be able to measure an SL positioning reference signal (PRS). In the case that the SL PRS is not capable of being measured, the SL positioning procedure may not be performed, leading to a positioning failure, which is an urgent problem to be solved.

### SUMMARY

The embodiments of the present disclosure provide a method and an apparatus for sidelink (SL) positioning. When a first terminal fails to measure an SL positioning reference signal (PRS), indication information may be sent to avoid the situation that an SL positioning procedure cannot be performed and thus avoid a positioning failure.

According to a first aspect of the embodiments of the present disclosure, a method for SL positioning is provided, executed by a first terminal, including: in response to an SL PRS to be received not being measured in an SL positioning procedure, sending indication information to a base station; sending indication information to a location management function (LMF) network element; or sending indication information to a second terminal.

In the technical solution, in response to the SL PRS to be received not being measured in the SL positioning procedure, the terminal sends the indication information to one of the base station, the LMF network element, or the second terminal. Therefore, in the case that the SL PRS to be received cannot be measured in the SL positioning procedure, the first terminal may send the indication information to avoid the SL positioning procedure from not being performed and avoid a positioning failure.

According to a second aspect of the embodiments of the present disclosure, another method for SL positioning is provided, executed by a base station, or an LMF network element, or a second terminal, including: receiving indication information sent by a first terminal, in which the indication information is sent by the first terminal in the case that an SL PRS to be received is not measured in an SL positioning procedure.

According to a third aspect of the embodiments of the present disclosure, a communication apparatus is provided, in which the communication apparatus has some or all of functions of the first terminal in the method in the above first aspect, for example, the communication apparatus may have functions of some or all of the embodiments of the present disclosure, or may have functions of solely implementing any one of the embodiments of the present disclosure. The functions may be realized by hardware, or by hardware executing corresponding software. The hardware or software includes one or more units or modules corresponding to the above functions.

In an implementation, the communication apparatus may include a transceiver module and a processing module configured to support the communication apparatus to perform corresponding functions in the above method. The transceiver module is configured to support communication between the communication apparatus and other devices. The communication apparatus may also include a storage module for coupling with the transceiver module and the processing module, in which the storage module also stores a computer program and data necessary for the communication apparatus.

In an implementation, the communication apparatus includes: a transceiver module, configured to in response to an SL PRS to be received not being measured in an SL positioning procedure, send indication information to a base station; or send indication information to a LMF network element; or send indication information to a second terminal.

According to a fourth aspect of the embodiments of the present disclosure, another communication apparatus is provided, in which the communication apparatus has some or all of functions of the base station or the LMF network element or the second terminal in the method in the above second aspect, for example, the communication apparatus may have functions of some or all of the embodiments of the present disclosure, or may have functions of solely implementing any one of the embodiments of the present disclosure. The functions may be realized by hardware, or by hardware executing corresponding software. The hardware or software includes one or more units or modules corresponding to the above functions.

In an implementation, the communication apparatus may include a transceiver module and a processing module configured to support the communication apparatus to perform corresponding functions in the above method. The transceiver module is configured to support communication between the communication apparatus and other devices. The communication apparatus may also include a storage module for coupling with the transceiver module and the processing module, in which the storage module also stores a computer program and data necessary for the communication apparatus.

In an implementation, the communication apparatus includes: a transceiver module, configured to receive indication information sent by a first terminal, in which the indication information is sent by the first terminal in the case that an SL PRS to be received is not measured in an SL positioning procedure.

According to a fifth aspect of the embodiments of the present disclosure, a communication device including a processor is provided. When a computer program in a memory is called by the processor, the method in the above first aspect is implemented.

According to a sixth aspect of the embodiments of the present disclosure, a communication device including a processor is provided. When a computer program in a memory is called by the processor, the method in the above second aspect is implemented.

According to a seventh aspect of the embodiments of the present disclosure, a communication device is provided, including a processor and a memory for storing a computer program. When the computer program stored in the memory is executed by the processor, the communication device is caused to implement the method in the above first aspect.

According to an eighth aspect of the embodiments of the present disclosure, a communication device is provided, including a processor and a memory for storing a computer program. When the computer program stored in the memory is executed by the processor, the communication device is caused to implement the method in the above second aspect.

According to a ninth aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above first aspect.

According to a tenth aspect of the embodiments of the present disclosure, a communication device including a processor and an interface circuit is provided, in which the interface circuit is configured to receive code instructions and transmit the code instructions to the processor; and the processor is configured to run the code instructions to cause the communication device to implement the method in the above second aspect.

According to an eleventh aspect of the embodiments of the present disclosure, a system for SL positioning is provided. The system includes the communication device in the third aspect and the communication device in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect of the embodiments of the present disclosure, a computer readable storage medium is provided, for storing instructions used by the above first terminal. When the instructions are executed, the first terminal is caused to implement the method in the above first aspect.

According to a thirteenth aspect of the embodiments of the present disclosure, a computer readable storage medium is provided, for storing instructions used by the above base station or the LMF network element or the second terminal. When the instructions are executed, the base station or the LMF network element or the second terminal is caused to implement the method in the above second aspect.

According to a fourteenth aspect of the present disclosure, a computer program product including a computer program is provided. When the computer program is running on a computer, the computer is caused to implement the method in the above first aspect.

According to a fifteenth aspect of the present disclosure, a computer program product including a computer program is provided. When the computer program is running on a computer, the computer is caused to implement the method in the above second aspect.

According to a sixteenth aspect of the present disclosure, a chip system is provided. The chip system includes at least one processor and interface, configured to support a first terminal to perform functions involved in the first aspect, for example, to determine or process at least one piece of data and information involved in the above methods. In a possible design, the chip system also includes a memory for storing a computer program and data necessary for the first terminal. The chip system may be composed of a chip, or may include a chip and other discrete devices.

According to a seventeenth aspect of the present disclosure, a chip system is provided. The chip system includes at least one processor and interface, configured to support a base station, an LMF network element, or a second terminal to perform functions involved in the second aspect, for example, to determine or process at least one piece of data and information in above methods. In a possible design, the chip system also includes a memory for storing a computer program and data necessary for the base station, the LMF network element, or the second terminal. The chip system may be composed of a chip, or may include a chip and other discrete devices.

According to an eighteenth aspect of the present disclosure, a computer program is provided. When the computer program is running on a computer, the computer is caused to implement the method in the first aspect.

According to a nineteenth aspect of the present disclosure, a computer program is provided. When the computer program is running on a computer, the computer is caused to implement the method in the second aspect.

### BRIEF DESCRIPTION OF THE DRAWINGS

In order to clearly illustrate technical solutions of embodiments of the present disclosure, a brief description of drawings used in embodiments is given below.
FIG. 1 is a schematic diagram of an architecture of a communication system according to the embodiments of the present disclosure.
FIG. 2 is a schematic diagram of a downlink-time difference of arrival (DL-TDOA) positioning procedure according to the embodiments of the present disclosure.
FIG. 3 is a flowchart of a method for sidelink (SL) positioning according to the embodiments of the present disclosure.
FIG. 3A is a flowchart of a method for SL positioning according to the embodiments of the present disclosure.
FIG. 4 is a flowchart of another method for SL positioning according to the embodiments of the present disclosure.
FIG. 5 is a flowchart of another method for SL positioning according to the embodiments of the present disclosure.
FIG. 6 is a flowchart of another method for SL positioning according to the embodiments of the present disclosure.
FIG. 7 is a flowchart of another method for SL positioning according to the embodiments of the present disclosure.
FIG. 8 is a flowchart of another method for SL positioning according to the embodiments of the present disclosure.
FIG. 9 is a flowchart of another method for SL positioning according to the embodiments of the present disclosure.
FIG. 10 is a flowchart of another method for SL positioning according to the embodiments of the present disclosure.
FIG. 11 is a flowchart of another method for SL positioning according to the embodiments of the present disclosure.
FIG. 12 is a block diagram of a communication apparatus according to the embodiments of the present disclosure.
FIG. 13 is a block diagram of a communication device according to the embodiments of the present disclosure.
FIG. 14 is a block diagram of a chip according to the embodiments of the present disclosure.

### DETAILED DESCRIPTION

In order to better understand a method and an apparatus for sidelink (SL) positioning in the embodiments of the present disclosure, the communication system applicable to the embodiments of the present disclosure is described below.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a/an" and "the" in the singular form used in the embodiments and claims of the present disclosure are also intended to include the plural form, unless the context clearly indicates other meaning. It may also be understood that the term "and/or" as used herein refers to any or all possible combinations of one or more associated listed items.

It may be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in the case that" used here may be interpreted as "when", "while", or "in response to determining...".

It needs to be noted that information (including but not limited to user equipment information, user personal information, etc.), data (including but not limited to data for analysis, stored data, displayed data, etc.) and a signal in the present disclosure are authorized by a user or fully authorized by all parties. A collection, usage and processing of relevant data shall comply with relevant laws, regulations and standards of relevant countries and regions.

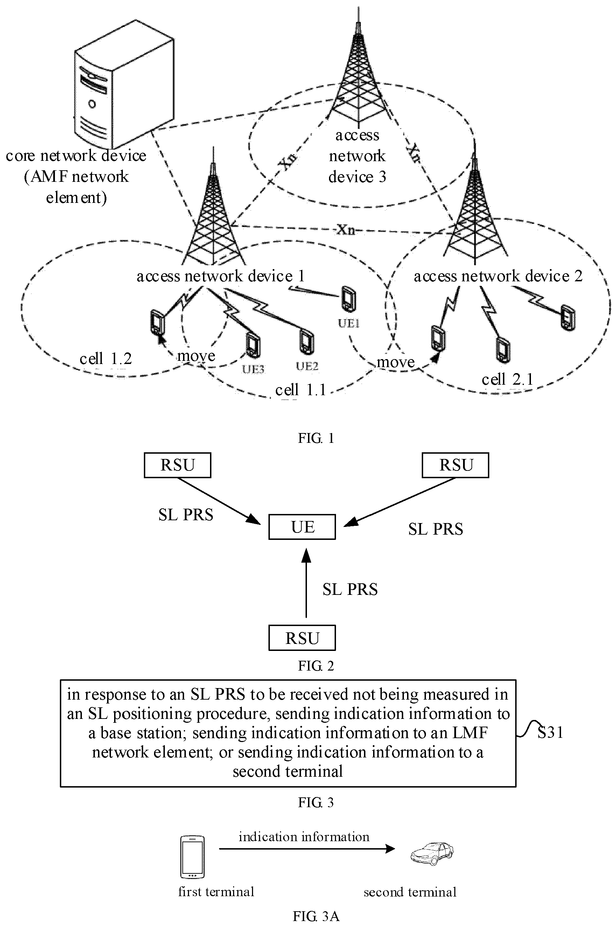

Please refer to FIG. 1, which is a schematic diagram of a communication system according to the embodiments of the present disclosure. As shown in FIG. 1, the communication system may include, but is not limited to, one radio access network (RAN), one terminal, and one core network device. The access network devices communicate with each other by a wired or wireless means, such as via an Xn interface in FIG 1. The access network device may cover one or more cells, for example, an access network device 1 covers a cell 1.1 and a cell 1.2, and an access network device 2 covers a cell 2.1. The terminal may camp on the access network device in a connected state in one of the cells. Further, the terminal may be converted from the connected state to a non-activated state, i.e. a non-connected state, via a radio resource control (RRC) release procedure. A terminal in the non-connected state may camp on a source cell and perform uplink and/or downlink transmission with the access network device in the source cell according to a transmission parameter of the terminal in the source cell. The terminal in the non-connected state may also move to a new cell and perform the uplink and/or downlink transmission with the access network device in the new cell according to a transmission parameter of the terminal in the new cell.

It needs to be noted that FIG. 1 is only an exemplary schematic diagram, and a number of nodes, a number of cells, and a state of the terminal included in FIG 1 are not limited. In addition to functional nodes in FIG. 1, other nodes, such as a gateway device, an application server, and so on, may be included, which is not limited. The access network device communicates with the core network device by the wired or wireless means, such as communication with each other via a next generation (NG) interface.

The terminal in embodiments of the present disclosure is an entity on a user side for receiving or transmitting signals, such as a mobile phone. The terminal may also be called a user equipment (UE), a mobile station (MS), a mobile terminal (MT), etc. The terminal may be a car, a smart car, a mobile phone, a wearable device, and a Pad, with communication function, a computer with wireless transceiving functions, a virtual reality (VR) terminal, an augmented reality (AR) terminal, a wireless terminal in an industrial control, a wireless terminal in a self-driving, a wireless terminal in remote medical surgery, a wireless terminal in a smart grid, a wireless terminal in a transportation safety, a wireless terminal in a smart city, a wireless terminal in a smart home, etc. The embodiments of the present disclosure do not limit the specific technology and the specific device form used by the terminal.

The RAN is used to provide a network access function for an authorized terminal in a specific area and may use transmission channels with different qualities based on a level of the terminal, a service requirement, etc. For example, the RAN may manage a radio resource, provide an access service for the terminal, and facilitate forwarding of control information and/or data information between the terminal and the core network (CN). The access network device in the embodiments of the present disclosure is a device that provides a wireless communication function for the terminal and may also be called a network device. For example, the access network device may include a next generation node base station (gNB) in a 5G system, an evolved node B (eNB) in a long-term evolution (LTE), a radio network controller (RNC), a node B (NB), a base station controller (BSC), a base transceiver station (BTS), a home base station (e.g., a home evolved node B or a home node B (HNB)), a base band unit (BBU), a transmitting and receiving point (TRP), a transmitting point (TP), a pico cell, a mobile switching center, or a network device in a future network. It may be understood that the embodiments of the present disclosure do not limit specific types of the access network device. In a system with different radio access technologies, a name of the device with an access network function may vary.

The core network device may include an access and mobility management function (AMF) and/or a LMF entity. Optionally, the LMF entity includes a location server, which may be implemented as any one of: a location management function (LMF) network element, an enhanced serving mobile location centre (E-SMLC), a secure user plane location (SUPL), or a SUPL location platform (SUPL SLP).

It may be understood that the communication system in the embodiments of the present disclosure is intended to illustrate the technical solution in the embodiments of the present disclosure more clearly, and does not constitute a limitation of the technical solution in the embodiments of the present disclosure. Those skilled in the art may know that the technical solution in the embodiments of the present disclosure is also applicable to similar technical problems, with the evolution of a system architecture and the emergence of a new service scene.

In addition, to facilitate understanding of the embodiments of the present disclosure, following points are explained.

First, in the embodiments of the present disclosure, "configured to indicate" may include "directly indicate" and "indirectly indicate". When describing that certain information is configured to indicate A, it may include information directly indicating A or indirectly indicating A, and does not necessarily mean that the information carries A.

Information indicated by the information is referred to as information to be indicated. In specific implementations, there are many ways to indicate the information to be indicated, including but not limited to: directly indicating the information to be indicated, such as indicating the information to be indicated itself or its index; or indirectly indicating the information to be indicated by indicating other information, in which there is an association relationship between other information and the information to be indicated; or indicating only a part of the information to be indicated, while the other part is known or pre-agreed. For example, indication of specific information may also be achieved by means of a pre-agreed (for example, pre-agreed by a protocol) order of each piece of information, thereby reducing an indication overhead to some extent.

The information to be indicated may be transmitted as a whole, or divided into a plurality of pieces of sub-information, which in turn are transmitted separately. Transmission periods and/or occasions of these pieces of sub-information may be the same or different, the specific transmission method of which is not limited in the present disclosure. The transmission periods and/or occasions of these pieces of sub-information may be predefined, for example, according to a protocol.

Second, the embodiments of the present disclosure lists a plurality of implementations to clearly illustrate the technical solution of the embodiments. Of course, those skilled in the art will understand that the plurality of embodiments in the present disclosure may be executed individually, or executed in combination with methods of other embodiments in the present disclosure, or executed individually or in combination with some methods in other related arts, which is not limited in the present disclosure.

In the embodiments of the present disclosure, the SL positioning between a terminal and another terminal includes absolute positioning, relative positioning, and ranging. The absolute positioning refers to determining an absolute coordinate of a terminal, the relative positioning refers to determining a coordinate of a terminal relative to one reference point, and the ranging refers to determining a distance and/or an angle of a terminal relative to one reference point.

The ranging typically involves only two terminals, while the absolute positioning and the relative positioning may involve a plurality of assistance terminals to assist in positioning.

As shown in FIG. 2, which is a schematic diagram of a downlink-time difference of arrival (DL-TDOA) positioning procedure according to the embodiments of the present disclosure. The terminal (or UE) may determine its specific location relative to road side units (RSUs) by measuring the SL PRS transmitted via the sidelink by a plurality of RSUs, such as more than or equal to three RSUs. In addition to the DL-TDOA, positioning solutions also include an uplink-TDOA (UL-TDOA), a multi-round trip time (multiple RTT), an angle of arrival (AOA), an angle of departure (AOD), carrier phase positioning, and so on. If a positioning result is not converted into an absolute coordinate based on absolute location information (such as information from a global positioning system (GPS)) of the RSU, the positioning result is the relative positioning. If the positioning result is converted into the absolute coordinate, the positioning result is the absolute positioning. The terminal involved in the relative/absolute positioning are referred to as a positioning assistance terminal, also known as an anchor terminal. The terminal to be positioned corresponds to the positioning assistance terminal.

If the positioning only involves two terminals, the two terminals serve as positioning assistance terminals for each other.

The positioning assistance terminal may be in different types, for example, an RSU-type positioning assistance terminal, which is a type of infrastructure to collaborate with other RSUs to provide the positioning service. For example, ordinary terminals may also be used as the positioning assistance terminals, but they are difficult to collaborate with other terminals to provide the positioning service. Additionally, some positioning assistance terminals have location information such as GPS information, which may assist other terminals in the absolute positioning, while other positioning assistance terminals may lack the location information such as the GPS information.

In the related art, in an SL positioning procedure, the terminal fails to measure the SL PRS. In the case that the SL PRS is not capable of being measured, the SL positioning procedure may not be performed, leading to a positioning failure, which is an urgent problem to be solved.

Based on this, the embodiments of the present disclosure provide a method for SL positioning. In case that a first terminal fails to measure an SL PRS to be received in the SL positioning procedure, the first terminal may send the indication information to the base station, or the LMF network element, or the second terminal. Therefore, in case that the first terminal fails to measure the SL PRS to be received in the SL positioning procedure, the first terminal may send the indication information to avoid the SL positioning procedure from not being performed and avoid a positioning failure.

A method and an apparatus for SL positioning in the present disclosure are described in detail with reference to accompanying drawings.

Please refer to FIG 3, which is a flowchart of a method for SL positioning according to the embodiments of the present disclosure.

As shown in FIG 3, the method is executed by a first terminal and may include, but is not limited to S31.

At S31, in response to an SL PRS to be received not being measured in an SL positioning procedure, indication information is sent to a base station; indication information is sent to an LMF network element; or indication information is sent to a second terminal.

In the embodiments of the present disclosure, in case that the first terminal fails to measure the SL PRS to be received in the SL positioning procedure, the first terminal may send the indication information to the base station.

In the embodiments of the present disclosure, in the case that the first terminal fails to measure the SL PRS to be received in the SL positioning procedure, the first terminal may send the indication information to the LMF network element.

In the embodiments of the present disclosure, in the case that the first terminal fails to measure the SL PRS to be received in the SL positioning procedure, the first terminal may send the indication information to the second terminal.

The SL positioning procedure executed by the first terminal may include an SL positioning procedure based on an SL-RTT, an SL positioning procedure based on an SL-TDOA, an SL positioning procedure based on an SL-AOA, an SL positioning procedure based on an SL-AOD, and so on, which is not limited in detail in the embodiments of the present disclosure.

In the embodiments of the present disclosure, the first terminal may be a terminal to be positioned or an anchor terminal; and the second terminal may be a terminal to be positioned or a terminal responsible for a positioning calculation.

Exemplarily, as shown in FIG. 3A, the first terminal may be the terminal to be positioned or the anchor terminal.

In the case that the first terminal is the terminal to be positioned, the second terminal may also be the terminal to be positioned or the terminal responsible for the positioning calculation.

In the case that the first terminal is the anchor terminal, the second terminal may also be the terminal to be positioned or the terminal responsible for the positioning calculation.

It may be understood that there are various reasons why the first terminal fails to measure the SL PRS to be received in the SL positioning procedure. For example, the first terminal fails to receive the SL PRS, or the first terminal fails to receive sufficient SL PRSs, or the first terminal may lack SL PRS configuration information.

Based on this, in the embodiments of the present disclosure, the indication information sent by the first terminal may indicate that the SL PRS to be received is not measured, or that some or any SL PRS is not capable of being measured, or that there is no SL PRS configuration information. In this case, adjustment may be made to address the situation where the first terminal fails to measure the SL PRS to be received in the SL positioning procedure, so as to avoid the SL positioning procedure from not being performed and avoid a positioning failure.

In some embodiments, the SL PRS to be received includes an SL PRS sent by an anchor terminal. In the case that the first terminal does not detect any SL PRS sent by the anchor terminal, the indication information indicates that no anchor terminal is capable of being measured or that no SL PRS is capable of being measured.

In the embodiments of the present disclosure, the first terminal may be the terminal to be positioned or the anchor terminal. The first terminal needs to receive the SL PRS sent by the anchor terminal, and the second terminal may be the terminal to be positioned or the terminal responsible for the positioning calculation.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting any SL PRS sent by the anchor terminal, the indication information sent by the first terminal may also indicate that no anchor terminal is capable of being measured or that no SL PRS is capable of being measured.

Exemplarily, the SL PRS to be received includes the SL PRS sent by the anchor terminal. In the case that a failure to measure the SL PRS to be received is due to the first terminal not detecting any SL PRS sent by the anchor terminal, the indication information sent by the first terminal to the base station may indicate that no anchor terminal is capable of being measured or that no SL PRS is capable of being measured.

Exemplarily, the SL PRS to be received includes the SL PRS sent by the anchor terminal. In the case that a failure to measure the SL PRS to be received is due to the first terminal not detecting any SL PRS sent by the anchor terminal, the indication information sent by the first terminal to the LMF network element may indicate that no anchor terminal is capable of being measured or that no SL PRS is capable of being measured.

Exemplarily, the SL PRS to be received includes the SL PRS sent by the anchor terminal. In the case that a failure to measure the SL PRS to be received is due to the first terminal not detecting any SL PRS sent by the anchor terminal, the indication information sent by the first terminal to the second terminal may indicate that no anchor terminal is capable of being measured or that no SL PRS is capable of being measured.

In some embodiments, the SL PRS to be received includes an SL PRS sent by an anchor terminal. In the case that the first terminal does not detect SL PRSs sent by some anchor terminals, the indication information indicates that the some anchor terminals are not capable of being measured or that some SL PRSs are not capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting SL PRSs sent by some anchor terminals, the indication information sent by the first terminal may also indicate that the some anchor terminals are not capable of being measured or that some SL PRSs are not capable of being measured.

Exemplarily, the SL PRS to be received includes the SL PRS sent by the anchor terminal. In the case that a failure to measure the SL PRS to be received is due to the first terminal not detecting SL PRSs sent by some anchor terminals, the indication information sent by the first terminal to the base station may indicate that the some anchor terminals are not capable of being measured or that some SL PRSs are not capable of being measured.

Exemplarily, the SL PRS to be received includes the SL PRS sent by the anchor terminal. In the case that a failure to measure the SL PRS to be received is due to the first terminal not detecting SL PRSs sent by some anchor terminals, the indication information sent by the first terminal to the LMF network element may indicate that the some anchor terminals are not capable of being measured or that some SL PRSs are not capable of being measured.

Exemplarily, the SL PRS to be received includes the SL PRS sent by the anchor terminal. In the case that a failure to measure the SL PRS to be received is due to the first terminal not detecting SL PRSs sent by some anchor terminals, the indication information sent by the first terminal to the second terminal may indicate that the some anchor terminals are not capable of being measured or that some SL PRSs are not capable of being measured.

In some embodiments, the SL PRS to be received includes an SL PRS sent by a target terminal. In the case that the first terminal does not detect the SL PRS sent by the target terminal, the indication information indicates that the target terminal is not capable of being measured or that the SL PRS is not capable of being measured.

In the embodiments of the present disclosure, the first terminal may be the terminal to be positioned or the anchor terminal. The first terminal needs to receive the SL PRS sent by the target terminal, and the second terminal may be the terminal to be positioned or the terminal responsible for the positioning calculation.

In the embodiments of the present disclosure, the first terminal fails to measure the SL PRS to be received in the SL positioning procedure, in which the SL PRS to be received includes the SL PRS sent by the target terminal. In the case that a failure to measure the SL PRS to be received is due to the first terminal not detecting the SL PRS sent by the target terminal, the indication information sent by the first terminal may indicate that the target terminal is not capable of being measured or that the SL PRS is not capable of being measured.

Exemplarily, the SL PRS to be received includes the SL PRS sent by the target terminal. In the case that a failure to measure the SL PRS to be received is due to the first terminal not detecting the SL PRS sent by the target terminal, the indication information sent by the first terminal to the base station may indicate that the target terminal is not capable of being measured or that the SL PRS is not capable of being measured.

Exemplarily, the SL PRS to be received includes the SL PRS sent by the target terminal. In the case that a failure to measure the SL PRS to be received is due to the first terminal not detecting the SL PRS sent by the target terminal, the indication information sent by the first terminal to the LMF network element may indicate that the target terminal is not capable of being measured or that the SL PRS is not capable of being measured.

Exemplarily, the SL PRS to be received includes the SL PRS sent by the target terminal. In the case that a failure to measure the SL PRS to be received is due to the first terminal not detecting the SL PRS sent by the target terminal, the indication information sent by the first terminal to the second terminal may indicate that the target terminal is not capable of being measured or that the SL PRS is not capable of being measured.

In some embodiments, in case of lack of SL PRS configuration information in the first terminal, the indication information indicates that there is no SL PRS configuration information.

It may be understood that the first terminal needs to receive the SL PRS according to the SL PRS configuration information. In case of lack of the SL PRS configuration information, the first terminal may not determine the SL PRS to be received, which will also lead to a failure to measure the SL PRS to be received.

Based on this, the situation where the first terminal fails to measure the SL PRS to be received in the SL positioning procedure may be the situation where the first terminal fails to determine the SL PRS to be received since the first terminal lacks the SL PRS configuration information in the SL positioning procedure.

In the embodiments of the present disclosure, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal may indicate that there is no SL PRS configuration information.

Exemplarily, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal to the base station may indicate that there is no SL PRS configuration information.

Exemplarily, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal to the LMF network element may indicate that there is no SL PRS configuration information.

Exemplarily, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal to the second terminal may indicate that there is no SL PRS configuration information.

In some embodiments, the SL PRS to be received not being measured in the SL positioning procedure includes at least one of:
not enough SL PRSs being received in an SL-TDOA positioning procedure; or
not enough SL PRSs being received in an SL-AOA positioning procedure.

It may be understood that the reason why the first terminal fails to measure the SL PRS to be received in the SL positioning procedure may be that the first terminal does not receive enough SL PRSs. For example, in the SL-TDOA positioning procedure, at least three SL PRSs are required, but the first terminal only receives one or two SL PRSs; for another example, in the SL-AOA positioning procedure, at least three SL PRSs are required, but the first terminal only receives one or two SL PRSs, and so on.

In the embodiments of the present disclosure, the situation where the first terminal fails to measure the SL PRS to be received in the SL positioning procedure may be the situation where not enough SL PRSs are received in the SL-TDOA positioning procedure.

In the embodiments of the present disclosure, the situation where the first terminal fails to measure the SL PRS to be received in the SL positioning procedure may be the situation where not enough SL PRSs are received in the SL-AOA positioning procedure.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

In some embodiments, the first terminal sending the indication information to the LMF network element includes:
sending the indication information to the LMF network element via a providing location information message in an SL long term evolution (LTE) positioning protocol (LPP) message; or
sending the indication information to the LMF network element via a providing location information message in an LPP message.

In the embodiments of the present disclosure, in the case that the first terminal fails to measure the SL PRS to be received in the SL positioning procedure, the first terminal may send the indication information to the LMF network element via the providing location information message in the SL LPP message.

In the embodiments of the present disclosure, in the case that the first terminal fails to measure the SL PRS to be received in the SL positioning procedure, the first terminal may send the indication information to the LMF network element via the providing location information message in the LPP message.

In some embodiments, the first terminal sending the indication information to the second terminal includes:
sending the indication information to the second terminal via a providing location information message in an SL LPP message; or
sending the indication information to the second terminal via a providing location information message in an LPP message.

In the embodiments of the present disclosure, in the case that the first terminal fails to measure the SL PRS to be received in the SL positioning procedure, the first terminal may send the indication information to the second terminal via the providing location information message in the SL LPP message.

In the embodiments of the present disclosure, in the case that the first terminal fails to measure the SL PRS to be received in the SL positioning procedure, the first terminal may send the indication information to the second terminal via the providing location information message in the LPP message.

In some embodiments, in response to the existence of some measurable SL PRSs, the first terminal obtains a measurement result by measuring the measurable SL PRSs; and reports the measurement result to the base station, or reports the measurement result to the LMF network element, or reports the measurement result to the second terminal.

It may be understood that the first terminal fails to measure the SL PRS to be received in the SL positioning procedure, in which there may be some measurable SL PRSs. In this case, the first terminal may obtain the measurement result by measuring the measurable SL PRSs and report the measurement result, or, the first terminal may not report the measurement result, that is, all measurement results are not reported.

Exemplarily, in the case that there are some measurable SL PRSs, the first terminal obtains a measurement result by measuring the measurable SL PRSs, and reports the measurement result to the base station.

Exemplarily, in the case that there are some measurable SL PRSs, the first terminal obtains a measurement result by measuring the measurable SL PRSs, and reports the measurement result to the LMF network element.

Exemplarily, in the case that there are some measurable SL PRSs, the first terminal obtains a measurement result by measuring the measurable SL PRSs, and reports the measurement result to the second terminal.

In some embodiments, in response to the first terminal sending a measurement report to the second terminal via a proximity communication 5-signaling (PC5-S) message, or sending a measurement report to the base station via an RRC message, performing at least one of:
in the case that there is no reportable measurement result, cancelling sending the measurement report;
in the case that there is no reportable measurement result, sending the measurement report, in which the measurement report is empty;
in the case that there is no reportable measurement result, sending the measurement report, in which the measurement report indicates that there is no measurement result;
in the case that there is no reportable measurement result, sending the measurement report, in which the measurement report indicates that no SL PRS is measured;
in the case that there is a reportable measurement result, sending the measurement report, in which the measurement report includes the reportable measurement result;
in the case that there is a reportable measurement result, sending the measurement report, in which the measurement report includes the reportable measurement result and information indicating an unmeasurable SL PRS; or
in the case that there is a reportable measurement result, sending the measurement report, in which the measurement report includes the reportable measurement result and information indicating that some SL PRSs are not capable of being measured.
In the embodiments of the present disclosure, in the case that the first terminal sends the measurement report to the second terminal via the PC5-S message, if there is no reportable measurement result, sending the measurement report to the second terminal may be cancelled.

Exemplarily, in the case that the first terminal only needs to measure one SL PRS but may not measure the one SL PRS, or the first terminal needs to measure a plurality of SL PRSs and may not measure the plurality of SL PRSs, there is no reportable measurement result, and the first terminal may cancel sending the measurement report to the second terminal.

In the embodiments of the present disclosure, in the case that the first terminal sends the measurement report to the second terminal via the PC5-S message, if there is no reportable measurement result, the first terminal may also send the measurement report to the second terminal, in which the measurement report is empty.

In the embodiments of the present disclosure, in the case that the first terminal sends the measurement report to the second terminal via the PC5-S message, if there is no reportable measurement result, the first terminal may also send the measurement report to the second terminal, in which the measurement report indicates that there is no measurement result.

In the embodiments of the present disclosure, in the case that the first terminal sends the measurement report to the second terminal via the PC5-S message, if there is no reportable measurement result, the first terminal may also send the measurement report to the second terminal, in which the measurement report indicates that no SL PRS is measured.

In the embodiments of the present disclosure, in the case that the first terminal sends the measurement report to the second terminal via the PC5-S message, if there is no reportable measurement result, the first terminal may send the measurement report to the second terminal, in which the measurement report includes the reportable measurement result.

In the embodiments of the present disclosure, in the case that the first terminal sends the measurement report to the second terminal via the PC5-S message, if there is no reportable measurement result, the first terminal may send the measurement report to the second terminal, in which the measurement report includes the reportable measurement result and the information indicating the unmeasurable SL PRS.

Exemplarily, when the measurement report indicates information of an unmeasurable SL PRS, a resource identifier (ID) of the unmeasurable SL PRS, and/or ID information (e.g., a sidelink source layer 2 ID) of a terminal that sends the unmeasurable SL PRS, and/or a service cell of a terminal that sends the unmeasurable SL PRS, may be provided in the measurement report.

In the embodiments of the present disclosure, in the case that the first terminal sending the measurement report to the second terminal via the PC5-S message, if there is no reportable measurement result, the first terminal may send the measurement report to the second terminal, in which the measurement report includes the reportable measurement result and the information indicating that some SL PRSs are not capable of being measured.

In the embodiments of the present disclosure, in the case that the first terminal sends the measurement result to the base station via the RRC message, if there is no reportable measurement result, sending the measurement report to the base station may be cancelled.

Exemplarily, in the case that the first terminal only needs to measure one SL PRS but may not measure the one SL PRS, or the first terminal needs to measure a plurality of SL PRSs and may not measure the plurality of SL PRSs, there is no reportable measurement result, and the first terminal may cancel sending the measurement report to the base station.

In the embodiments of the present disclosure, in the case that the first terminal sends the measurement report to the base station via the RRC message, if there is no reportable measurement result, the first terminal may also send the measurement report to the base station, in which the measurement report is empty.

In the embodiments of the present disclosure, in the case that the first terminal sends the measurement report to the base station via the RRC message, if there is no reportable measurement result, the first terminal may also send the measurement report to the base station, in which the measurement report indicates that there is no measurement result.

In the embodiments of the present disclosure, in the case that the first terminal sends the measurement report to the base station via the RRC message, if there is no reportable measurement result, the first terminal may also send the measurement report to the base station, in which the measurement report indicates that no SL PRS is measured.

In the embodiments of the present disclosure, in the case that the first terminal sends the measurement report to the base station via the RRC message, if there is a reportable measurement result, the first terminal may send the measurement report to the base station, in which the measurement report includes the reportable measurement result.

In the embodiments of the present disclosure, in the case that the first terminal sends the measurement report to the base station via the RRC message, if there is a reportable measurement result, the first terminal may send the measurement report to the base station, in which the measurement report includes the reportable measurement result and the information indicating the unmeasurable SL PRS.

Exemplarily, when the measurement report indicates information of an unmeasurable SL PRS, a resource ID of the unmeasurable SL PRS, and/or ID information (e.g., a sidelink source layer 2 ID) of a terminal that sends the unmeasurable SL PRS, and/or a service cell of a terminal that sends the unmeasurable SL PRS, may be provided in the measurement report.

In the embodiments of the present disclosure, in the case that the first terminal sends the measurement report to the base station via the RRC message, if there is a reportable measurement result, the first terminal may send the measurement report to the base station, in which the measurement report includes the reportable measurement result and the information indicating that some SL PRSs are not capable of being measured.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

In some embodiments, in response to failing to measure an SL PRS, the first terminal triggers a measurement reporting procedure based on an SL-RRC message or an RRC message; or in response to failing to measure an SL PRS, the first terminal triggers a location reporting procedure based on an SL LPP message or an LPP message.

In the embodiments of the present disclosure, in response to failing to measure the SL PRS, the first terminal triggers the measurement reporting procedure based on the SL-RRC message or the RRC message; or in response to failing to measure the SL PRS, the first terminal triggers the location reporting procedure based on the SL LPP message or the LPP message. The measurement report reported by the first terminal may indicate that there is no measurement result, or no SL PRS is measured, or the measurement report is empty, and so on.

In the embodiments of the present disclosure, in the case that the situation where the first terminal fails to measure the SL PRS to be received in the SL positioning procedure is the situation where the first terminal fails to measure the SL PRS, the measurement reporting procedure is triggered based on the SL-RRC message.

Triggering by the first terminal the measurement reporting procedure based on the SL-RRC message may include sending the SL-RRC message to the second terminal to perform the measurement reporting procedure.

In the embodiments of the present disclosure, in the case that the situation where the first terminal fails to measure the SL PRS to be received in the SL positioning procedure is the situation where the first terminal fails to measure the SL PRS, the measurement reporting procedure is triggered based on the RRC message.

Triggering by the first terminal the measurement reporting procedure based on the RRC message may include: sending the RRC message to the base station to perform the measurement reporting procedure.

In the embodiments of the present disclosure, in the case that the situation where the first terminal fails to measure the SL PRS to be received in the SL positioning procedure is the situation where the first terminal fails to measure the SL PRS, the location reporting procedure is triggered based on the SL LPP message.

Triggering by the first terminal the location reporting procedure based on the SL LPP message may include: sending the SL LPP message to the second terminal to perform the location reporting procedure.

In the embodiments of the present disclosure, in the case that the situation where the first terminal fails to measure the SL PRS to be received in the SL positioning procedure is the situation where the first terminal fails to measure the SL PRS, the location reporting procedure is triggered based on the LPP message.

Triggering by the first terminal the location reporting procedure based on the LPP message may include: sending the LPP message to the second terminal to perform the location reporting procedure.

In the embodiments of the present disclosure, in the case that the situation where the first terminal fails to measure the SL PRS to be received in the SL positioning procedure is the situation where the first terminal fails to measure the SL PRS, the location reporting procedure is triggered based on the SL LPP message.

Triggering by the first terminal the location reporting procedure based on the SL LPP message may include: sending the SL LPP message to the LMF network element to perform the location reporting procedure.

In the embodiments of the present disclosure, in the case that the situation where the first terminal fails to measure the SL PRS to be received in the SL positioning procedure is the situation where the first terminal fails to measure the SL PRS, the location reporting procedure is triggered based on the LPP message.

Triggering by the first terminal the location reporting procedure based on the LPP message may include: sending the LPP message to the LMF network element to perform the location reporting procedure.

It may be understood that in the case that the first terminal fails to measure the SL PRS to be received, the measurement reporting procedure based on the SL-RRC message or the RRC message may be directly triggered, without other reasons of the first terminal itself to trigger the measurement reporting procedure.

It may be understood that in the case that the first terminal fails to measure the SL PRS to be received, the location reporting procedure based on the SL LPP message or the LPP message may be directly triggered, without other reasons of the first terminal itself to trigger the location reporting procedure.

By implementing the embodiments of the present disclosure, in the case that the first terminal fails to measure the SL PRS to be received in the SL positioning procedure, the first terminal sends the indication information to the base station, the LMF network element or the second terminal. Therefore, in the case that the SL PRS to be received cannot be measured in the SL positioning procedure, the first terminal may send the indication information to avoid the SL positioning procedure from not being performed and avoid a positioning failure.

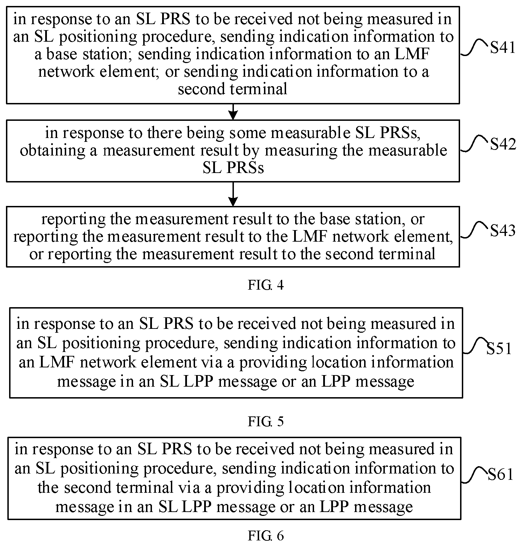

Please refer to FIG. 4, which is a flowchart of another method for SL positioning according to the embodiments of the present disclosure.

As shown in FIG 4, the method is executed by a first terminal, and may include but is not limited to S41 to S43.

At S41, in response to an SL PRS to be received not being measured in an SL positioning procedure, the terminal sends indication information to a base station; sends indication information to a location management function (LMF) network element; or sends indication information to a second terminal.

For a relevant description of S41, please refer to the relevant description in the above embodiments, which will not be repeated here.

At S42, in response to the existence of some measurable SL PRSs, a measurement result is obtained by measuring the measurable SL PRSs.

At S43, the measurement result is reported to the base station, or the measurement result is reported to the LMF network element, or the measurement result is reported to the second terminal.

It may be understood that the first terminal fails to measure the SL PRS to be received in the SL positioning procedure, in which there may be some measurable SL PRSs. In this case, the first terminal may obtain the measurement result by measuring the measurable SL PRSs and report the measurement result, or, the first terminal may not report the measurement result, that is, all measurement results are not reported.

Exemplarily, in the case that there are some measurable SL PRSs, the first terminal obtains a measurement result by measuring the measurable SL PRSs, and reports the measurement result to the base station.

Exemplarily, in the case that there are some measurable SL PRSs, the first terminal obtains a measurement result by measuring the measurable SL PRSs, and reports the measurement result to the LMF network element.

Exemplarily, in the case that there are some measurable SL PRSs, the first terminal obtains a measurement result by measuring the measurable SL PRSs, and reports the measurement result to the second terminal.

For the contents indicated by the indication information, please refer to the relevant description in the above embodiments, which will not be repeated here.

It needs to be noted that, in the embodiments of the present disclosure, S41 to S43 may be solely implemented or in combination with any one of other steps in the embodiments of the present disclosure, such as in combination with S31 in the embodiments of the present disclosure, which is not limited in the embodiments of the present disclosure.

By implementing the embodiments of the present disclosure, in the case that the first terminal fails to measure the SL PRS to be received in the SL positioning procedure, the first terminal sends the indication information to the base station, the LMF network element or the second terminal; in response to the existence of some measurable SL PRSs, the measurement result is obtained by measuring the measurable SL PRSs; and the measurement result is reported to the base station, the LMF network element or the second terminal. Therefore, in the case that the first terminal fails to measure the SL PRS to be received in the SL positioning procedure, the first terminal may send the indication information to avoid the SL positioning procedure from not being performed and avoid a positioning failure, and may report the measurement result in the case that there are some measurable SL PRSs.

Please refer to FIG. 5, which is a flowchart of another method for SL positioning according to the embodiments of the present disclosure.

As shown in FIG 5, the method is executed by a first terminal, and may include but is not limited to S51.

At S51, in response to an SL PRS to be received not being measured in an SL positioning procedure, indication information is sent to an LMF network element via a providing location information message in an SL LPP message or in an LPP message.

In the embodiments of the present disclosure, in the case that the first terminal fails to measure the SL PRS to be received in the SL positioning procedure, the first terminal may send the indication information to the LMF network element via the providing location information message in the SL LPP message.

In the embodiments of the present disclosure, in the case that the first terminal fails to measure the SL PRS to be received in the SL positioning procedure, the first terminal may send the indication information to the LMF network element via the providing location information message in the LPP message.

For the contents indicated by the indication information, please refer to the relevant description in the above embodiments, which will not be repeated here.

It needs to be noted that, in the embodiments of the present disclosure, S51 may be solely implemented or in combination with any one of other steps in the embodiments of the present disclosure, such as in combination with S31 and/or S41 to S43 in the embodiments of the present disclosure, which is not limited in the embodiments of the present disclosure.

By implementing the embodiments of the present disclosure, in the case that the first terminal fails to measure the SL PRS to be received in the SL positioning procedure, the first terminal sends the indication information to the LMF network element via the providing location information message in the SL LPP message or in the LPP message. Therefore, in the case that the first terminal fails to measure the SL PRS to be received in the SL positioning procedure, the first terminal may send the indication information to the LMF network element so as to avoid the SL positioning procedure from not being performed and avoid a positioning failure.

Please refer to FIG. 6, which is a flowchart of another method for SL positioning according to the embodiments of the present disclosure.

As shown in FIG 6, the method is executed by a first terminal, and may include but is not limited to S61.

At S61, in response to an SL PRS to be received not being measured in an SL positioning procedure, indication information is sent to the second terminal via a providing location information message in an SL LPP message or an LPP message.

In the embodiments of the present disclosure, in the case that the first terminal fails to measure the SL PRS to be received in the SL positioning procedure, the first terminal may send the indication information to the second terminal via the providing location information message in the SL LPP message.

In the embodiments of the present disclosure, in the case that the first terminal fails to measure the SL PRS to be received in the SL positioning procedure, the first terminal may send the indication information to the second terminal via the providing location information message in the LPP message.

For the contents indicated by the indication information, please refer to the relevant description in the above embodiments, which will not be repeated here.

It needs to be noted that, in the embodiments of the present disclosure, S61 may be solely implemented or in combination with any one of other steps in the embodiments of the present disclosure, such as in combination with S31 and/or S41 to S43 in the embodiments of the present disclosure, which is not limited in the embodiments of the present disclosure.

By implementing the embodiments of the present disclosure, in the case that the first terminal fails to measure the SL PRS to be received in the SL positioning procedure, the indication information may be sent to the second terminal via the providing location information message in the SL LPP message or the LPP message. Therefore, in the case that the first terminal fails to measure the SL PRS to be received in the SL positioning procedure, the first terminal may send the indication information to the second terminal so as to avoid the SL positioning procedure from not being performed and avoid a positioning failure.

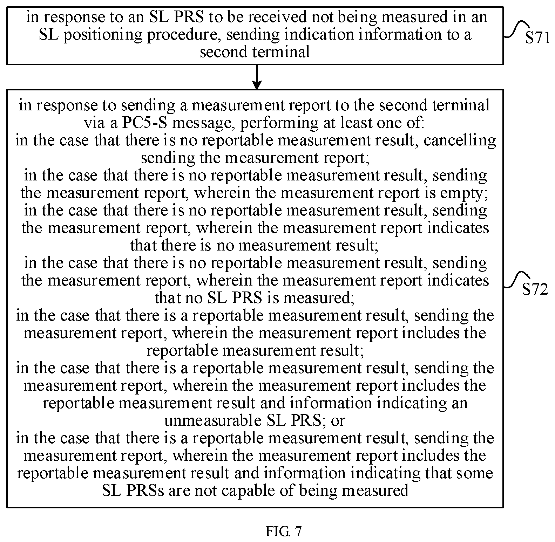

Please refer to FIG. 7, which is a flowchart of another method for SL positioning according to the embodiments of the present disclosure.

As shown in FIG 7, the method is executed by a first terminal, and may include but is not limited to S71 to S72.

At S71, in response to an SL PRS to be received not being measured in an SL positioning procedure, indication information is sent to a second terminal.

For a relevant description of S71, please refer to the relevant description in the above embodiments, which will not be repeated here.

At S72, in response to sending a measurement report to the second terminal via a PC5-S message, at least one of following steps is implemented:
in the case that there is no reportable measurement result, cancelling sending the measurement report;
in the case that there is no reportable measurement result, sending the measurement report, in which the measurement report is empty;
in the case that there is no reportable measurement result, sending the measurement report, in which the measurement report indicates that there is no measurement result;
in the case that there is no reportable measurement result, sending the measurement report, in which the measurement report indicates that no SL PRS is measured;
in the case that there is a reportable measurement result, sending the measurement report, in which the measurement report includes the reportable measurement result;
in the case that there is a reportable measurement result, sending the measurement report, in which the measurement report includes the reportable measurement result and information indicating an unmeasurable SL PRS; or
in the case that there is a reportable measurement result, sending the measurement report, in which the measurement report includes the reportable measurement result and information indicating that some SL PRSs are not capable of being measured.

In the embodiments of the present disclosure, in the case that the first terminal sends the measurement report to the second terminal via the PC5-S message, if there is no reportable measurement result, sending the measurement report to the second terminal may be cancelled.

Exemplarily, in the case that the first terminal only needs to measure one SL PRS but may not measure the one SL PRS, or the first terminal needs to measure a plurality of SL PRSs and may not measure the plurality of SL PRSs, there is no reportable measurement result, and the first terminal may cancel sending the measurement report to the second terminal.

In the embodiments of the present disclosure, in the case that the first terminal sends the measurement report to the second terminal via the PC5-S message, if there is no reportable measurement result, the first terminal may also send the measurement report to the second terminal, in which the measurement report is empty.

In the embodiments of the present disclosure, in the case that the first terminal sends the measurement report to the second terminal via the PC5-S message, if there is no reportable measurement result, the first terminal may also send the measurement report to the second terminal, in which the measurement report indicates that there is no measurement result.

In the embodiments of the present disclosure, in the case that the first terminal sends the measurement report to the second terminal via the PC5-S message, if there is no reportable measurement result, the first terminal may also send the measurement report to the second terminal, in which the measurement report indicates that no SL PRS is measured.

In the embodiments of the present disclosure, in the case that the first terminal sends the measurement report to the second terminal via the PC5-S message, if there is no reportable measurement result, the first terminal may send the measurement report to the second terminal, in which the measurement report includes the reportable measurement result.

In the embodiments of the present disclosure, in the case that the first terminal sends the measurement report to the second terminal via the PC5-S message, if there is no reportable measurement result, the first terminal may send the measurement report to the second terminal, in which the measurement report includes the reportable measurement result and the information indicating the unmeasurable SL PRS.

Exemplarily, when the measurement report indicates information of an unmeasurable SL PRS, a resource ID of the unmeasurable SL PRS, and/or ID information (e.g., a sidelink source layer 2 ID) of a terminal that sends the unmeasurable SL PRS, and/or a service cell of a terminal that sends the unmeasurable SL PRS, may be provided in the measurement report.

In the embodiments of the present disclosure, in the case that the first terminal sending the measurement report to the second terminal via the PC5-S message, if there is no reportable measurement result, the first terminal may send the measurement report to the second terminal, in which the measurement report includes the reportable measurement result and the information indicating that some SL PRSs are not capable of being measured.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

For the contents indicated by the indication information, please refer to the relevant description in the above embodiments, which will not be repeated here.

It needs to be noted that, in the embodiments of the present disclosure, S71 and S72 may be solely implemented or in combination with any one of other steps in the embodiments of the present disclosure, such as in combination with S31 and/or S41 to S43 and/or S61 in the embodiments of the present disclosure, which is not limited in the embodiments of the present disclosure.

By implementing the embodiments of the present disclosure, in the case that the first terminal fails to measure the SL PRS to be received, the first terminal may send the indication information to the second terminal so as to avoid the SL positioning procedure from not being performed and avoid a positioning failure; and may send the measurement report to the second terminal.

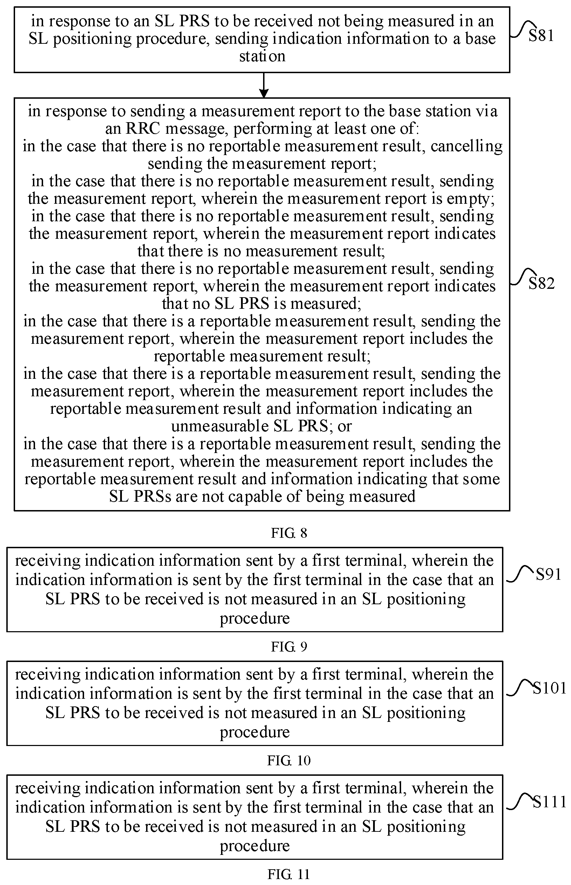

Please refer to FIG. 8, which is a flowchart of another method for SL positioning according to the embodiments of the present disclosure.

As shown in FIG 8, the method is executed by a first terminal, and may include but is not limited to S81 to S82.

At S81, in response to an SL PRS to be received not being measured in an SL positioning procedure, indication information is sent to a base station.

For a relevant description of S81, please refer to the relevant description in the above embodiments, which will not be repeated here.

At S82, in response to sending a measurement report to the base station via an RRC message, at least one of following steps is implemented:
in the case that there is no reportable measurement result, cancelling sending the measurement report;
in the case that there is no reportable measurement result, sending the measurement report, in which the measurement report is empty;
in the case that there is no reportable measurement result, sending the measurement report, in which the measurement report indicates that there is no measurement result;
in the case that there is no reportable measurement result, sending the measurement report, in which the measurement report indicates that no SL PRS is measured;
in the case that there is a reportable measurement result, sending the measurement report, in which the measurement report includes the reportable measurement result;
in the case that there is a reportable measurement result, sending the measurement report, in which the measurement report includes the reportable measurement result and information indicating an unmeasurable SL PRS; or
in the case that there is a reportable measurement result, sending the measurement report, in which the measurement report includes the reportable measurement result and information indicating that some SL PRSs are not capable of being measured.

In the embodiments of the present disclosure, in the case that the first terminal sends the measurement report to the base station via the RRC message, if there is no reportable measurement result, sending the measurement report to the second terminal may be cancelled.

Exemplarily, in the case that the first terminal only needs to measure one SL PRS but may not measure the one SL PRS, or the first terminal needs to measure a plurality of SL PRSs and may not measure the plurality of SL PRSs, there is no reportable measurement result, and the first terminal may cancel sending the measurement report to the base station.

In the embodiments of the present disclosure, in the case that the first terminal sends the measurement report to the base station via the RRC message, if there is no reportable measurement result, the first terminal may also send the measurement report to the base station, in which the measurement report is empty.

In the embodiments of the present disclosure, in the case that the first terminal sends the measurement report to the base station via the RRC message, if there is no reportable measurement result, the first terminal may also send the measurement report to the base station, in which the measurement report indicates that there is no measurement result.

In the embodiments of the present disclosure, in the case that the first terminal sends the measurement report to the base station via the RRC message, if there is no reportable measurement result, the first terminal may also send the measurement report to the base station, in which the measurement report indicates that no SL PRS is measured.

In the embodiments of the present disclosure, in the case that the first terminal sends the measurement report to the base station via the RRC message, if there is a reportable measurement result, the first terminal may send the measurement report to the base station, in which the measurement report includes the reportable measurement result.

In the embodiments of the present disclosure, in the case that the first terminal sends the measurement report to the base station via the RRC message, if there is a reportable measurement result, the first terminal may send the measurement report to the base station, in which the measurement report includes the reportable measurement result and the information indicating the unmeasurable SL PRS.

Exemplarily, when the measurement report indicates information of an unmeasurable SL PRS, a resource ID of the unmeasurable SL PRS, and/or ID information (e.g., a sidelink source layer 2 ID) of a terminal that sends the unmeasurable SL PRS, and/or a service cell of a terminal that sends the unmeasurable SL PRS, may be provided in the measurement report.

In the embodiments of the present disclosure, in the case that the first terminal sends the measurement report to the base station via the RRC message, if there is a reportable measurement result, the first terminal may send the measurement report to the base station, in which the measurement report includes the reportable measurement result and the information indicating that some SL PRSs are not capable of being measured.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

For the contents indicated by the indication information, please refer to the relevant description in the above embodiments, which will not be repeated here.

It needs to be noted that, in the embodiments of the present disclosure, S81 and S82 may be solely implemented or in combination with any one of other steps in the embodiments of the present disclosure, such as in combination with S31 and/or S41 to S43 and/or S61 in the embodiments of the present disclosure, which is not limited in the embodiments of the present disclosure.

By implementing the embodiments of the present disclosure, in the case that the first terminal fails to measure the SL PRS to be received, the first terminal may send the indication information to the base station so as to avoid the SL positioning procedure from not being performed and avoid a positioning failure; and may send the measurement report to the base station.

Please refer to FIG. 9, which is a flowchart of another method for SL positioning according to the embodiments of the present disclosure.

As shown in FIG 9, the method is executed by a base station, and may include but is not limited to S91.

At S91, indication information sent by a first terminal is received, in which the indication information is sent by the first terminal in the case that an SL PRS to be received is not measured in an SL positioning procedure.

In the embodiments of the present disclosure, in response to the case that the first terminal fails to measure the SL PRS to be received in the SL positioning procedure, the first terminal may send the indication information to the base station. The base station receives the indication information sent by the first terminal, in which the indication information is sent by the first terminal in case of the SL PRS to be received not being measured in the SL positioning procedure.

In the embodiments of the present disclosure, the first terminal may be the terminal to be positioned, or the anchor terminal.

It may be understood that there are various reasons why the first terminal fails to measure the SL PRS to be received in the SL positioning procedure. For example, the first terminal fails to receive the SL PRS, or the first terminal fails to receive sufficient SL PRSs, or the first terminal may lack SL PRS configuration information.

Based on this, in the embodiments of the present disclosure, the indication information sent by the first terminal may indicate that the SL PRS to be received is not measured, or that some or any SL PRS is not capable of being measured, or that there is no SL PRS configuration information. In this case, adjustment may be made to address the situation where the first terminal fails to measure the SL PRS to be received in the SL positioning procedure, so as to avoid the SL positioning procedure from not being performed and avoid a positioning failure.

In some embodiments, the SL PRS to be received includes an SL PRS sent by an anchor terminal. In the case that the first terminal does not detect any SL PRS sent by the anchor terminal, the indication information indicates that no anchor terminal is capable of being measured or that no SL PRS is capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting any SL PRS sent by the anchor terminal, the indication information sent by the first terminal may also indicate that no anchor terminal is capable of being measured or that no SL PRS is capable of being measured.

Exemplarily, the SL PRS to be received includes the SL PRS sent by the anchor terminal. In the case that a failure to measure the SL PRS to be received is due to the first terminal not detecting any SL PRS sent by the anchor terminal, the indication information sent by the first terminal to the base station may indicate that no anchor terminal is capable of being measured or that no SL PRS is capable of being measured.

In some embodiments, the SL PRS to be received includes an SL PRS sent by an anchor terminal. In the case that the first terminal does not detect SL PRSs sent by some anchor terminals, the indication information indicates that the some anchor terminals are not capable of being measured or that some SL PRSs are not capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting SL PRSs sent by some anchor terminals, the indication information sent by the first terminal may also indicate that the some anchor terminals are not capable of being measured or that some SL PRSs are not capable of being measured.

Exemplarily, the SL PRS to be received includes the SL PRS sent by the anchor terminal. In the case that a failure to measure the SL PRS to be received is due to the first terminal not detecting SL PRSs sent by some anchor terminals, the indication information sent by the first terminal to the base station may indicate that the some anchor terminals are not capable of being measured or that some SL PRSs are not capable of being measured.

In some embodiments, the SL PRS to be received includes an SL PRS sent by a target terminal. In the case that the first terminal does not detect the SL PRS sent by the target terminal, the indication information indicates that the target terminal is not capable of being measured or that the SL PRS is not capable of being measured.

In the embodiments of the present disclosure, the first terminal fails to measure the SL PRS to be received in the SL positioning procedure, in which the SL PRS to be received includes the SL PRS sent by the target terminal. In the case that a failure to measure the SL PRS to be received is due to the first terminal not detecting the SL PRS sent by the target terminal, the indication information sent by the first terminal may indicate that the target terminal is not capable of being measured or that the SL PRS is not capable of being measured.

Exemplarily, the SL PRS to be received includes the SL PRS sent by the target terminal. In the case that a failure to measure the SL PRS to be received is due to the first terminal not detecting the SL PRS sent by the target terminal, the indication information sent by the first terminal to the base station may indicate that the target terminal is not capable of being measured or that the SL PRS is not capable of being measured.

In some embodiments, in case of lack of SL PRS configuration information in the first terminal, the indication information indicates that there is no SL PRS configuration information.

In the embodiments of the present disclosure, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal may indicate that there is no SL PRS configuration information.

Exemplarily, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal to the base station may indicate that there is no SL PRS configuration information.

In some embodiments, the SL PRS to be received not being measured in the SL positioning procedure includes at least one of:
not enough SL PRSs being received in an SL-TDOA positioning procedure; or
not enough SL PRSs being received in an SL-AOA positioning procedure.

It may be understood that the reason why the first terminal fails to measure the SL PRS to be received in the SL positioning procedure may be that the first terminal does not receive enough SL PRSs. For example, in the SL-TDOA positioning procedure, at least three SL PRSs are required, but the first terminal only receives one or two SL PRSs; for another example, in the SL-AOA positioning procedure, at least three SL PRSs are required, but the first terminal only receives one or two SL PRSs, and so on.

In the embodiments of the present disclosure, the situation where the first terminal fails to measure the SL PRS to be received in the SL positioning procedure may be the situation where not enough SL PRSs are received in the SL-TDOA positioning procedure.

In the embodiments of the present disclosure, the situation where the first terminal fails to measure the SL PRS to be received in the SL positioning procedure may be the situation where not enough SL PRSs are received in the SL-AOA positioning procedure.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

In some embodiments, the base station also receives a measurement result reported by the first terminal, in which the measurement result is obtained by measuring measurable SL PRSs in the case that there are some measurable SL PRSs in the first terminal.

It may be understood that the first terminal fails to measure the SL PRS to be received in the SL positioning procedure, in which there may be some measurable SL PRSs. In this case, the first terminal may obtain the measurement result by measuring the measurable SL PRSs and report the measurement result, or, the first terminal may not report the measurement result, that is, all measurement results are not reported.

Exemplarily, in the case that there are some measurable SL PRSs, the first terminal obtains the measurement result by measuring the measurable SL PRSs, and reports the measurement result to the base station. The base station also receives a measurement result reported by the first terminal, in which the measurement result is obtained by measuring measurable SL PRSs in the case that there are some measurable SL PRSs in the first terminal.

In some embodiments, the base station receives measurement report sent by the first terminal, in which the measurement report is sent by the first terminal to the base station via an RRC message in the case that there is no reportable measurement result or in the case that there is a reportable measurement result. The measurement result includes at least one of:
the measurement report being empty;
the measurement report indicating that there is no measurement result;
the measurement report indicating that no SL PRS is measured;
the measurement report including the reportable measurement result;
the measurement report including the reportable measurement result and information indicating an unmeasurable SL PRS; or
the measurement report including the reportable measurement result and information indicating that some SL PRSs are not capable of being measured.

In the embodiments of the present disclosure, in the case that the first terminal sends the measurement report to the base station via the RRC message, if there is no reportable measurement result, the first terminal may also send the measurement report to the base station, in which the measurement report is empty.

In the embodiments of the present disclosure, in the case that the first terminal sends the measurement report to the base station via the RRC message, if there is no reportable measurement result, the first terminal may also send the measurement report to the base station, in which the measurement report indicates that there is no measurement result.

In the embodiments of the present disclosure, in the case that the first terminal sends the measurement report to the base station via the RRC message, if there is no reportable measurement result, the first terminal may also send the measurement report to the base station, in which the measurement report indicates that no SL PRS is measured.

In the embodiments of the present disclosure, in the case that the first terminal sends the measurement report to the base station via the RRC message, if there is a reportable measurement result, the first terminal may send the measurement report to the base station, in which the measurement report includes the reportable measurement result.

In the embodiments of the present disclosure, in the case that the first terminal sends the measurement report to the base station via the RRC message, if there is a reportable measurement result, the first terminal may send the measurement report to the base station, in which the measurement report includes the reportable measurement result and the information indicating the unmeasurable SL PRS.

Exemplarily, when the measurement report indicates information of an unmeasurable SL PRS, a resource ID of the unmeasurable SL PRS, and/or ID information (e.g., a sidelink source layer 2 ID) of a terminal that sends the unmeasurable SL PRS, and/or a service cell of a terminal that sends the unmeasurable SL PRS, may be provided in the measurement report.

In the embodiments of the present disclosure, in the case that the first terminal sends the measurement report to the base station via the RRC message, if there is a reportable measurement result, the first terminal may send the measurement report to the base station, in which the measurement report includes the reportable measurement result and the information indicating that some SL PRSs are not capable of being measured.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

It needs to be noted that, in the embodiments of the present disclosure, S91 may be solely implemented or in combination with any one of other steps in the embodiments of the present disclosure, such as in combination with S31 in the embodiments of the present disclosure, which is not limited in the embodiments of the present disclosure.

By implementing the embodiments of the present disclosure, the base station receives the indication information sent by the first terminal, in which the indication information is sent by the first terminal in case of the SL PRS to be received not being measured in the SL positioning procedure, which may avoid the SL positioning procedure from not being performed and avoid a positioning failure.

Please refer to FIG. 10, which is a flowchart of another method for SL positioning according to the embodiments of the present disclosure.

As shown in FIG 10, the method is executed by an LMF network element, and may include but is not limited to S101.

At S101, indication information sent by a first terminal is received, in which the indication information is sent by the first terminal in the case that an SL PRS to be received is not measured in an SL positioning procedure.

In the embodiments of the present disclosure, in case of the SL PRS to be received not being measured in the SL positioning procedure, the first terminal may send the indication information to the LMF network element. The LMF network element receives the indication information sent by the first terminal, in which the indication information is sent by the first terminal in the case that the SL PRS to be received is not measured in the SL positioning procedure.

In the embodiments of the present disclosure, the first terminal may be the terminal to be positioned, or the anchor terminal.

It may be understood that there are various reasons why the first terminal fails to measure the SL PRS to be received in the SL positioning procedure. For example, the first terminal fails to receive the SL PRS, or the first terminal fails to receive sufficient SL PRS, or the first terminal may lack SL PRS configuration information.

Based on this, in the embodiments of the present disclosure, the indication information sent by the first terminal may indicate that the SL PRS to be received is not measured, or that some or any SL PRS is not capable of being measured, or that there is no SL PRS configuration information. In this case, adjustment may be made to address the situation where the first terminal fails to measure the SL PRS to be received in the SL positioning procedure, so as to avoid the SL positioning procedure from not being performed and avoid a positioning failure.

In some embodiments, the SL PRS to be received includes an SL PRS sent by an anchor terminal. In the case that the first terminal does not detect any SL PRS sent by the anchor terminal, the indication information indicates that no anchor terminal is capable of being measured or that no SL PRS is capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting any SL PRS sent by the anchor terminal, the indication information sent by the first terminal may also indicate that no anchor terminal is capable of being measured or that no SL PRS is capable of being measured.

Exemplarily, the SL PRS to be received includes the SL PRS sent by the anchor terminal. In the case that a failure to measure the SL PRS to be received is due to the first terminal not detecting any SL PRS sent by the anchor terminal, the indication information sent by the first terminal to the base station may indicate that no anchor terminal is capable of being measured or that no SL PRS is capable of being measured.

In some embodiments, the SL PRS to be received includes an SL PRS sent by an anchor terminal. In the case that the first terminal does not detect SL PRSs sent by some anchor terminals, the indication information indicates that the some anchor terminals are not capable of being measured or that some SL PRSs are not capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting SL PRSs sent by some anchor terminals, the indication information sent by the first terminal may also indicate that the some anchor terminals are not capable of being measured or that some SL PRSs are not capable of being measured.

Exemplarily, the SL PRS to be received includes the SL PRS sent by the anchor terminal. In the case that a failure to measure the SL PRS to be received is due to the first terminal not detecting SL PRSs sent by some anchor terminals, the indication information sent by the first terminal to the LMF network element may indicate that the some anchor terminals are not capable of being measured or that some SL PRSs are not capable of being measured.

In some embodiments, the SL PRS to be received includes an SL PRS sent by a target terminal. In the case that the first terminal does not detect the SL PRS sent by the target terminal, the indication information indicates that the target terminal is not capable of being measured or that the SL PRS is not capable of being measured.

In the embodiments of the present disclosure, the first terminal fails to measure the SL PRS to be received in the SL positioning procedure, in which the SL PRS to be received includes the SL PRS sent by the target terminal. In the case that a failure to measure the SL PRS to be received is due to the first terminal not detecting the SL PRS sent by the target terminal, the indication information sent by the first terminal may indicate that the target terminal is not capable of being measured or that the SL PRS is not capable of being measured.

Exemplarily, the SL PRS to be received includes the SL PRS sent by the target terminal. In the case that a failure to measure the SL PRS to be received is due to the first terminal not detecting the SL PRS sent by the target terminal, the indication information sent by the first terminal to the LMF network element may indicate that the target terminal is not capable of being measured or that the SL PRS is not capable of being measured.

In some embodiments, in case of lack of SL PRS configuration information in the first terminal, the indication information indicates that there is no SL PRS configuration information.

In the embodiments of the present disclosure, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal may indicate that there is no SL PRS configuration information.

Exemplarily, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal to the LMF network element may indicate that there is no SL PRS configuration information.

In some embodiments, the SL PRS to be received not being measured in the SL positioning procedure includes at least one of:
not enough SL PRSs being received in an SL-TDOA positioning procedure; or
not enough SL PRSs being received in an SL-AOA positioning procedure.

It may be understood that the reason why the first terminal fails to measure the SL PRS to be received in the SL positioning procedure may be that the first terminal does not receive enough SL PRSs. For example, in the SL-TDOA positioning procedure, at least three SL PRSs are required, but the first terminal only receives one or two SL PRSs; for another example, in the SL-AOA positioning procedure, at least three SL PRSs are required, but the first terminal only receives one or two SL PRSs, and so on.

In the embodiments of the present disclosure, the situation where the first terminal fails to measure the SL PRS to be received in the SL positioning procedure may be the situation where not enough SL PRSs are received in the SL-TDOA positioning procedure.

In the embodiments of the present disclosure, the situation where the first terminal fails to measure the SL PRS to be received in the SL positioning procedure may be the situation where not enough SL PRSs are received in the SL-AOA positioning procedure.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

In some embodiments, the LMF network element also receives a measurement result reported by the first terminal, in which the measurement result is obtained by measuring measurable SL PRSs in the case that there are some measurable SL PRSs in the first terminal.

It may be understood that the first terminal fails to measure the SL PRS to be received in the SL positioning procedure, in which there may be some measurable SL PRSs. In this case, the first terminal may obtain the measurement result by measuring the measurable SL PRSs and report the measurement result, or, the first terminal may not report the measurement result, that is, the measurement result is not reported even if there is a measurement result.

Exemplarily, in the case that there are some measurable SL PRSs, the first terminal obtains a measurement result by measuring the measurable SL PRSs, and reports the measurement result to the LMF network element. The LMF network element also receives a measurement result reported by the first terminal, in which the measurement result is obtained by measuring measurable SL PRSs in the case that there are some measurable SL PRSs in the first terminal.

It needs to be noted that, in the embodiments of the present disclosure, S101 may be solely implemented or in combination with any one of other steps in the embodiments of the present disclosure, such as in combination with S31 in the embodiments of the present disclosure, which is not limited in the embodiments of the present disclosure.

By implementing the embodiments of the present disclosure, the LMF network element receives the indication information sent by the first terminal, in which the indication information is sent by the first terminal in the case that the SL PRS to be received is not measured in the SL positioning procedure, which may avoid the SL positioning procedure from not being performed and avoid a positioning failure.

Please refer to FIG 11, which is a flowchart of another method for SL positioning according to the embodiments of the present disclosure.

As shown in FIG. 11, the method is executed by a second terminal, and may include but is not limited to S111.

At S111, indication information sent by a first terminal is received, in which the indication information is sent by the first terminal in the case that an SL PRS to be received is not measured in an SL positioning procedure.

In the embodiments of the present disclosure, in case of the SL PRS to be received not being measured in the SL positioning procedure, the first terminal may send the indication information to the second terminal. The second terminal receives the indication information sent by the first terminal, in which the indication information is sent by the first terminal in the case that the SL PRS to be received is not measured in the SL positioning procedure.

In the embodiments of the present disclosure, the first terminal may be the terminal to be positioned, or the anchor terminal.

It may be understood that there are various reasons why the first terminal fails to measure the SL PRS to be received in the SL positioning procedure. For example, the first terminal fails to receive the SL PRS, or the first terminal fails to receive sufficient SL PRS, or the first terminal may lack SL PRS configuration information.

Based on this, in the embodiments of the present disclosure, the indication information sent by the first terminal may indicate that the SL PRS to be received is not measured, or that some or any SL PRS is not capable of being measured, or that there is no SL PRS configuration information. In this case, adjustment may be made to address the situation where the first terminal fails to measure the SL PRS to be received in the SL positioning procedure, so as to avoid the SL positioning procedure from not being performed and avoid a positioning failure.

In some embodiments, the SL PRS to be received includes an SL PRS sent by an anchor terminal. In the case that the first terminal does not detect any SL PRS sent by the anchor terminal, the indication information indicates that no anchor terminal is capable of being measured or that no SL PRS is capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting any SL PRS sent by the anchor terminal, the indication information sent by the first terminal may indicate that no anchor terminal is capable of being measured or that no SL PRS is capable of being measured.

Exemplarily, the SL PRS to be received includes the SL PRS sent by the anchor terminal. In the case that a failure to measure the SL PRS to be received is due to the first terminal not detecting any SL PRS sent by the anchor terminal, the indication information sent by the first terminal to the second terminal may indicate that no anchor terminal is capable of being measured or that no SL PRS is capable of being measured.

In some embodiments, the SL PRS to be received includes an SL PRS sent by an anchor terminal. In the case that the first terminal does not detect SL PRSs sent by some anchor terminals, the indication information indicates that the some anchor terminals are not capable of being measured or that some SL PRSs are not capable of being measured.

In the embodiments of the present disclosure, the first terminal fails to measure the SL PRS to be received in the SL positioning procedure, in which the SL PRS to be received includes the SL PRS sent by the anchor terminal. In the case that a failure to measure the SL PRS to be received is due to the first terminal not detecting SL PRSs sent by some anchor terminals, the indication information sent by the first terminal may indicate that the some anchor terminals are not capable of being measured or that some SL PRSs are not capable of being measured.

Exemplarily, the SL PRS to be received includes the SL PRS sent by the anchor terminal. In the case that a failure to measure the SL PRS to be received is due to the first terminal not detecting SL PRSs sent by some anchor terminals, the indication information sent by the first terminal to the second terminal may indicate that the some anchor terminals are not capable of being measured or that some SL PRSs are not capable of being measured.

In some embodiments, the SL PRS to be received includes an SL PRS sent by a target terminal. In the case that the first terminal does not detect the SL PRS sent by the target terminal, the indication information indicates that the target terminal is not capable of being measured or that the SL PRS is not capable of being measured.

In the embodiments of the present disclosure, the first terminal fails to measure the SL PRS to be received in the SL positioning procedure, in which the SL PRS to be received includes the SL PRS sent by the target terminal. In the case that a failure to measure the SL PRS to be received is due to the first terminal not detecting the SL PRS sent by the target terminal, the indication information sent by the first terminal may indicate that the target terminal is not capable of being measured or that the SL PRS is not capable of being measured.

Exemplarily, the SL PRS to be received includes the SL PRS sent by the target terminal. In the case that a failure to measure the SL PRS to be received is due to the first terminal not detecting the SL PRS sent by the target terminal, the indication information sent by the first terminal to the second terminal may indicate that the target terminal is not capable of being measured or that the SL PRS is not capable of being measured.

In some embodiments, in case of lack of SL PRS configuration information in the first terminal, the indication information indicates that there is no SL PRS configuration information.

In the embodiments of the present disclosure, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal may indicate that there is no SL PRS configuration information.

Exemplarily, in the case that the situation where the first terminal fails to measure the SL PRS to be received in the SL positioning procedure is the situation where the first terminal fails to measure the SL PRS to be received since the first terminal lacks the SL PRS configuration information, the indication information sent by the first terminal to the second terminal may indicate that there is no SL PRS configuration information.

In some embodiments, the SL PRS to be received not being measured in the SL positioning procedure includes at least one of:
not enough SL PRSs being received in an SL-TDOA positioning procedure; or
not enough SL PRSs being received in an SL-AOA positioning procedure.

It may be understood that the reason why the first terminal fails to measure the SL PRS to be received in the SL positioning procedure may be that the first terminal does not receive enough SL PRSs. For example, in the SL-TDOA positioning procedure, at least three SL PRSs are required, but the first terminal only receives one or two SL PRSs; for another example, in the SL-AOA positioning procedure, at least three SL PRSs are required, but the first terminal only receives one or two SL PRSs, and so on.

In the embodiments of the present disclosure, the situation where the first terminal fails to measure the SL PRS to be received in the SL positioning procedure may be the situation where not enough SL PRSs are received in the SL-TDOA positioning procedure.

In the embodiments of the present disclosure, the situation where the first terminal fails to measure the SL PRS to be received in the SL positioning procedure may be the situation where not enough SL PRSs are received in the SL-AOA positioning procedure.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

In some embodiments, the second terminal also receives a measurement result reported by the first terminal, in which the measurement result is obtained by measuring measurable SL PRSs in the case that there are some measurable SL PRSs in the first terminal.

It may be understood that the first terminal fails to measure the SL PRS to be received in the SL positioning procedure, in which there may be some measurable SL PRSs. In this case, the first terminal may obtain the measurement result by measuring the measurable SL PRSs and report the measurement result, or, the first terminal may not report the measurement result, that is, all measurement results are not reported.

Exemplarily, in the case that there are some measurable SL PRSs, the first terminal obtains a measurement result by measuring the measurable SL PRSs, and reports the measurement result to the second terminal. The second terminal also receives a measurement result reported by the first terminal, in which the measurement result is obtained by measuring measurable SL PRSs in the case that there are some measurable SL PRSs in the first terminal.

In some embodiments, the second terminal receives measurement report sent by the first terminal, in which the measurement report is sent by the first terminal to the base station via a PC5-S message in the case that there is no reportable measurement result or in the case that there is a reportable measurement result. The measurement result includes at least one of:
the measurement report being empty;
the measurement report indicating that there is no measurement result;
the measurement report indicating that no SL PRS is measured;
the measurement report including the reportable measurement result;
the measurement report including the reportable measurement result and information indicating an unmeasurable SL PRS; or
the measurement report including the reportable measurement result and information indicating that some SL PRSs are not capable of being measured.

In the embodiments of the present disclosure, in the case that the first terminal sends the measurement report to the second terminal via the PC5-S message, if there is no reportable measurement result, the first terminal may also send the measurement report to the second terminal, in which the measurement report is empty.

In the embodiments of the present disclosure, in the case that the first terminal sends the measurement report to the second terminal via the PC5-S message, if there is no reportable measurement result, the first terminal may also send the measurement report to the second terminal, in which the measurement report indicates that there is no measurement result.

In the embodiments of the present disclosure, in the case that the first terminal sends the measurement report to the second terminal via the PC5-S message, if there is no reportable measurement result, the first terminal may also send the measurement report to the second terminal, in which the measurement report indicates that no SL PRS is measured.

In the embodiments of the present disclosure, in the case that the first terminal sends the measurement report to the second terminal via the PC5-S message, if there is a reportable measurement result, the first terminal may send the measurement report to the second terminal, in which the measurement report includes the reportable measurement result.

In the embodiments of the present disclosure, in the case that the first terminal sends the measurement report to the second terminal via the PC5-S message, if there is a reportable measurement result, the first terminal may send the measurement report to the second terminal, in which the measurement report includes the reportable measurement result and the information indicating the unmeasurable SL PRS.

Exemplarily, when the measurement report indicates information of an unmeasurable , resource ID of the unmeasurable SL PRS, and/or ID information (e.g., a sidelink source layer 2 ID) of a terminal that sends the unmeasurable SL PRS, , and/or a service cell of a terminal that sends the unmeasurable SL PRS, may be provided in the measurement report.

In the embodiments of the present disclosure, in the case that the first terminal sends the measurement report to the second terminal via the PC5-S message, if there is a reportable measurement result, the first terminal may send the measurement report to the second terminal, in which the measurement report includes the reportable measurement result and the information indicating that some SL PRSs are not capable of being measured.

It needs to be noted that the above embodiments are not exhaustive and are only exemplary of some embodiments. The above embodiments may be implemented solely or in combination with a plurality of embodiments. The above embodiments are only exemplary and not intended as a specific limit on the protection scope of the embodiments of the present disclosure.

It needs to be noted that, in the embodiments of the present disclosure, S111 may be solely implemented or in combination with any one of other steps in the embodiments of the present disclosure, such as in combination with S31 in the embodiments of the present disclosure, which is not limited in the embodiments of the present disclosure.

By implementing the embodiments of the present disclosure, the second terminal receives the indication information sent by the first terminal, in which the indication information is sent by the first terminal in case of the SL PRS to be received not being measured in the SL positioning procedure, which may avoid the SL positioning procedure from not being performed and avoid a positioning failure.

In the embodiments of the present disclosure, the method in the embodiments of the present disclosure is introduced respectively from the perspective of the first terminal, the base station, the LMF network element and the second terminal.

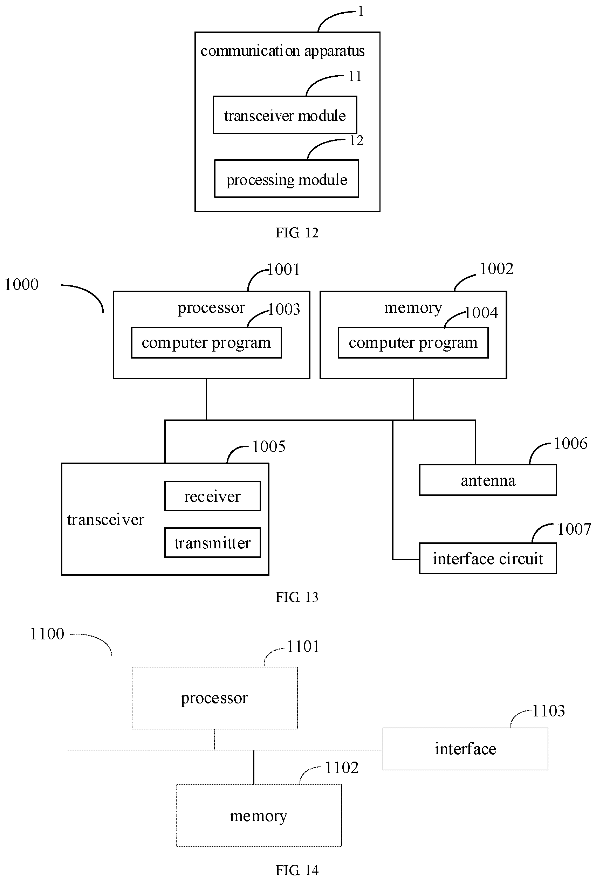

Please refer to FIG. 12, which is a block diagram of a communication apparatus 1 according to the embodiments of the present disclosure. The communication apparatus 1 in the FIG. 12 may include a transceiver module 11 and a processing module 12. The transceiver module may include a transmitting module and/or a receiving module. The transmitting module is configured to achieve a transmitting function, the receiving module is configured to achieve a receiving function, and the transceiver module may achieve the transmitting function and/or the receiving function.

The communication apparatus 1 may be a first terminal, a device in a first terminal, or a device being used in match with a first terminal. Or, the communication apparatus 1 may be a base station, a device in a base station, or a device being used in match with a base station. Or, the communication apparatus 1 may be an LMF network element, a device in an LMF network element, or a device being used in match with an LMF network element. Or, the communication apparatus 1 may be a second terminal, a device in a second terminal, or a device being used in match with a second terminal.

When the communication apparatus 1 is a first terminal, the communication apparatus includes a transceiver module 11.

The transceiver module 11 is configured to in response to an SL PRS to be received not being measured in an SL positioning process, send indication information to a base station; or send indication information to a location management function (LMF) network element; or send indication information to a second terminal.

In some embodiments, the SL PRS to be received includes an SL PRS sent by an anchor terminal. In the case that the first terminal does not detect any SL PRS sent by the anchor terminal, the indication information indicates that no anchor terminal is capable of being measured or that no SL PRS is capable of being measured.

In some embodiments, the SL PRS to be received includes an SL PRS sent by an anchor terminal. In the case that the first terminal does not detect SL PRSs sent by some anchor terminals, the indication information indicates that the some anchor terminals are not capable of being measured or that some SL PRSs are not capable of being measured.

In some embodiments, the SL PRS to be received includes an SL PRS sent by a target terminal. In the case that the first terminal does not detect the SL PRS sent by the target terminal, the indication information indicates that the target terminal is not capable of being measured or that the SL PRS is not capable of being measured.

In some embodiments, in case of lack of SL PRS configuration information in the first terminal, the indication information indicates that there is no SL PRS configuration information.

In some embodiments, the SL PRS to be received not being measured in the SL positioning procedure includes at least one of:
not enough SL PRSs being received in an SL-TDOA positioning procedure; or
not enough SL PRSs being received in an SL-AOA positioning procedure.

In some embodiments, the transceiver module 11 is further configured to send the indication information to the LMF network element via a providing location information message in an SL LPP message; or send the indication information to the LMF network element via a providing location information message in an LPP message.

In some embodiments, the transceiver module 11 is further configured to send the indication information to the second terminal via a providing location information message in an SL LPP message; or send the indication information to the second terminal via a providing location information message in an LPP message.

In some embodiments, the apparatus further includes: a processing module 12, configured to in response to the existence of some measurable SL PRSs, obtain a measurement result by measuring the measurable SL PRSs.

The transceiver module 11 is further configured to report the measurement result to the base station, or report the measurement result to the LMF network element, or report the measurement result to the second terminal.

In some embodiments, the transceiver module 11 is further configured to in response to sending a measurement report to the second terminal via a PC5-S message, or sending a measurement report to the base station via an RRC message, perform at least one of:
in the case that there is no reportable measurement result, cancelling sending the measurement report;
in the case that there is no reportable measurement result, sending the measurement report, in which the measurement report is empty;
in the case that there is no reportable measurement result, sending the measurement report, in which the measurement report indicates that there is no measurement result;
in the case that there is no reportable measurement result, sending the measurement report, in which the measurement report indicates that no SL PRS is measured;
in the case that there is a reportable measurement result, sending the measurement report, in which the measurement report includes the reportable measurement result;
in the case that there is a reportable measurement result, sending the measurement report, in which the measurement report includes the reportable measurement result and information indicating an unmeasurable SL PRS; or
in the case that there is a reportable measurement result, sending the measurement report, in which the measurement report includes the reportable measurement result and information indicating that some SL PRSs are not capable of being measured.

In some embodiments, the transceiver module 11 is further configured to in response to failing to measure an SL PRS, trigger a measurement reporting procedure based on an SL-RRC message or an RRC message; or in response to failing to measure an SL PRS, trigger a location reporting procedure based on an SL LPP message or an LPP message.

When the communication apparatus 1 is a base station, an LMF network element, or a second terminal, the apparatus includes a transceiver module 11.

The transceiver module 11 is configured to receive indication information sent by a first terminal, in which the indication information is sent by the first terminal in the case that an SL PRS to be received is not measured in an SL positioning procedure.

In some embodiments, the SL PRS to be received includes an SL PRS sent by an anchor terminal. In the case that the first terminal does not detect any SL PRS sent by the anchor terminal, the indication information indicates that no anchor terminal is capable of being measured or that no SL PRS is capable of being measured.

In some embodiments, the SL PRS to be received includes an SL PRS sent by an anchor terminal. In the case that the first terminal does not detect SL PRSs sent by some anchor terminals, the indication information indicates that the some anchor terminals are not capable of being measured or that some SL PRSs are not capable of being measured.

In some embodiments, the SL PRS to be received includes an SL PRS sent by a target terminal. In the case that the first terminal does not detect the SL PRS sent by the target terminal, the indication information indicates that the target terminal is not capable of being measured or that the SL PRS is not capable of being measured.

In some embodiments, in case of lack of SL PRS configuration information in the first terminal, the indication information indicates that there is no SL PRS configuration information.

In some embodiments, the SL PRS to be received not being measured in the SL positioning procedure includes at least one of:
not enough SL PRSs being received in an SL-TDOA positioning procedure; or
not enough SL PRSs being received in an SL-AOA positioning procedure.

In some embodiments, the transceiver module 11 is further configured to receive a measurement result reported by the first terminal, in which the measurement result is obtained by measuring measurable SL PRSs in the case that there are some measurable SL PRSs in the first terminal.

With respect to the communication apparatus 1 in the above embodiments, specific methods in which each module performs an operation have been described in detail in an embodiment relating to the method and will not be elaborated here.

The communication apparatus 1 in the above embodiments of the present disclosure achieves a same or similar beneficial effect as the method for SL positioning in some of the above embodiments, which is not described here.

Please refer to FIG. 13, which is a block diagram of a communication device 1000 according to the embodiments of the present disclosure. The communication device 1000 may be a base station, a first terminal, a second terminal, an LMF network element, or a chip, a chip system, a processor, etc. that supports the base station or the LMF network element to implement the above method, or a chip, a chip system, a processor, etc. that supports the first terminal or the second terminal to implement the above method. The communication device 1000 is configured to implement the method in the above method embodiments. For details, please refer to the description in the above method embodiments.

The communication device 1000 may include one or more processors 1001. The processor 1001 may be a general-purpose processor or a special-purpose processor. For example, it may be a baseband processor or a central processing unit. The baseband processor may be configured to process communication protocols and communication data, and the central processor may be configured to control communication devices (such as base stations, baseband chips, terminals, terminal chips, DU or CU, etc.) to execute computer programs and process computer program data.

Optionally, the communication device 1000 may also include one or more memories 1002 on which a computer program 1004 is stored. When the computer program 1004 is executed by the processor 1001, the communication device 1000 is caused to implement the method in the above method embodiments. Optionally, the memory 1002 may also store data. The communication device 1000 and the memory 1002 may be set separately or integrated together.

Optionally, the communication device 1000 includes a transceiver 1005 and an antenna 1006. The transceiver 1005 may be called a transceiving unit, a transceiving machine, or a transceiving circuit, etc., to achieve a transceiving function. The transceiver 1005 may include a receiver and a transmitter. The receiver may be called a receiver or a receiving circuit, etc., to achieve the receiving function; and the transmitter may be called a transmitter or a transmitting circuit, etc., to achieve the transmitting function.

Optionally, the communication device 1000 includes one or more interface circuits 1007. The interface circuit 1007 is configured to receive code instructions and transmit the code instructions to the processor 1001. When the code instructions are running on the processor 1001, the communication device 1000 is caused to implement the method in the above embodiments.

When the communication device 1000 is a first terminal, the transceiver 1005 is configured to execute S31 in FIG 3; S41 and S43 in FIG. 4; S51 in FIG 5; S61 in FIG 6; S71 and S72 in FIG. 7; and S81 and S82 in FIG 8. The processor 1001 is configured to execute S42 in FIG. 4.

When the communication device 1000 is a network device, the transceiver 1005 is configured to execute S91 in FIG 9.

When the communication device 1000 is an LMF network element, the transceiver 1005 is configured to execute S101 in FIG. 10.

When the communication device 1000 is a second terminal, the transceiver 1005 is configured to execute S111 in FIG. 11.

In an implementation, the processor 1001 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 1001 may store a computer program 1003. When the computer program 1003 is running on the processor 1001, the communication device 1000 is caused to implement the method in the above embodiments. The computer program 1003 may be solidified in the processor 1001. In this way, the processor 1001 may be implemented in hardware.

In an implementation, the communication device 1000 includes a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal, but the scope of the communication device in the present disclosure is not limited to this, and the structure of the communication device may not be restricted by FIG. 13. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, please refer to the FIG. 14, which is a block diagram of a chip according to the embodiments of the present disclosure.

The chip 1100 includes a processor 1101 and an interface 1103. There may be one or more processors 1101, and there may be a plurality of interfaces 1103.

For the case where the chip is configured to achieve functions of the first terminal in the embodiments of the present disclosure,
the interface 1103 is configured to receive code instructions and transmit the code instructions to the processor; and
the processor 1101 is configured to run the code instructions to implement the method for SL positioning in some of the above embodiments.

For the case where the chip is configured to achieve functions of the second terminal in the embodiments of the present disclosure,
the interface 1103 is configured to receive code instructions and transmit the code instructions to the processor; and
the processor 1101 is configured to run code instructions to implement the method for SL positioning in some of the above embodiments.

For the case where the chip is configured to achieve functions of the base station in the embodiments of the present disclosure,
the interface 1103 is configured to receive code instructions and transmit the code instructions to the processor; and
the processor 1101 is configured to run code instructions to implement the method for SL positioning in some of the above embodiments.

For the case where the chip is configured to achieve functions of the LMF network element in the embodiments of the present disclosure,
the interface 1103 is configured to receive code instructions and transmit the code instructions to the processor; and
the processor 1101 is configured to run code instructions to implement the method for SL positioning in some of the above embodiments.

Optionally, the chip 1100 further includes a memory 1102 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above functions, but such implementation shall not be regarded as going beyond the scope of the protection of the embodiments of the present disclosure.

The embodiments of the present disclosure also provide a system for SL positioning. The system includes a communication apparatus as a first terminal and a communication apparatus as a base station in the above embodiments in FIG. 12. Or, the system includes a communication apparatus as a first terminal and a communication apparatus as an LMF network element in the above embodiments in FIG 12. Or, the system includes a communication apparatus as a first terminal and a communication apparatus as a second terminal in the above embodiments in FIG. 12. Or, the system includes a communication device as a first terminal and a communication device as a base station in the above embodiments in FIG. 13. Or, the system includes a communication device as a first terminal and a communication device as an LMF network element in the above embodiments in FIG. 13. Or, the system includes a communication device as a first terminal and a communication device as a second terminal in the above embodiments in FIG 13.

The present disclosure also provides a computer readable storage medium for storing instructions. When the instructions are executed by a computer, functions of any one of the above method embodiments is performed.

The present disclosure also provides a computer program product. When the computer program product is executed by a computer, functions of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for sidelink (SL) positioning, executed by a first terminal, comprising:
in response to an SL positioning reference signal (PRS) to be received not being measured in an SL positioning procedure, sending indication information, wherein sending the indication information comprises at least one of:
sending the indication information to a base station;
sending the indication information to a location management function (LMF) network element; or
sending the indication information to a second terminal.

2. The method of claim 1, wherein the SL PRS to be received comprises an SL PRS sent by an anchor terminal, in the case that the first terminal does not detect any SL PRS sent by the anchor terminal, the indication information indicates that no anchor terminal is capable of being measured or that no SL PRS is capable of being measured.

3. The method of claim 1, wherein the SL PRS to be received comprises an SL PRS sent by an anchor terminal, in the case that the first terminal does not detect SL PRSs sent by some anchor terminals, the indication information indicates that the some anchor terminals are not capable of being measured or that some SL PRSs are not capable of being measured.

4. The method of claim 1, wherein the SL PRS to be received comprises an SL PRS sent by a target terminal, in the case that the first terminal does not detect the SL PRS sent by the target terminal, the indication information indicates that the target terminal is not capable of being measured or that the SL PRS is not capable of being measured.

5. The method of claim 1, wherein in case of lack of SL PRS configuration information in the first terminal, the indication information indicates that there is no SL PRS configuration information.

6. The method of any one of claims 1 to 5, wherein the SL PRS to be received not being measured in the SL positioning procedure comprises at least one of:
not enough SL PRSs being received in an SL-time difference of arrival (TDOA) positioning procedure; or
not enough SL PRSs being received in an SL-angle of arrival (AOA) positioning procedure.

7. The method of any one of claims 1 to 6, wherein sending the indication information to the LMF network element comprises:
sending the indication information to the LMF network element via a providing location information message in an SL long term evolution (LTE) positioning protocol (LPP) message; or
sending the indication information to the LMF network element via a providing location information message in an LPP message.

8. The method of any one of claims 1 to 6, wherein sending the indication information to the second terminal comprises:
sending the indication information to the second terminal via a providing location information message in an SL long term evolution (LTE) positioning protocol (LPP) message; or
sending the indication information to the second terminal via a providing location information message in an LPP message.

9. The method of claim 1, further comprising:
in response to the existence of some measurable SL PRSs, obtaining a measurement result by measuring the measurable SL PRSs; and
reporting the measurement result to the base station, or reporting the measurement result to the LMF network element, or reporting the measurement result to the second terminal.

10. The method of claim 1, further comprising:
in response to sending a measurement report to the second terminal via a proximity communication 5-signaling (PC5-S) message, or sending a measurement report to the base station via a radio resource control (RRC) message, performing at least one of:
in the case that there is no reportable measurement result, cancelling sending the measurement report;
in the case that there is no reportable measurement result, sending the measurement report, wherein the measurement report is empty;
in the case that there is no reportable measurement result, sending the measurement report, wherein the measurement report indicates that there is no measurement result;
in the case that there is no reportable measurement result, sending the measurement report, wherein the measurement report indicates that no SL PRS is measured;
in the case that there is a reportable measurement result, sending the measurement report, wherein the measurement report comprises the reportable measurement result;
in the case that there is a reportable measurement result, sending the measurement report, wherein the measurement report comprises the reportable measurement result and information indicating an unmeasurable SL PRS; or
in the case that there is a reportable measurement result, sending the measurement report, wherein the measurement report comprises the reportable measurement result and information indicating that some SL PRSs are not capable of being measured.

11. The method of claim 1, further comprising:
in response to failing to measure an SL PRS, triggering a measurement reporting procedure based on an SL-RRC message or an RRC message; or
in response to failing to measure an SL PRS, triggering a location reporting procedure based on an SL LPP message or an LPP message.

12. A method for sidelink (SL) positioning, executed by a base station, a location management function (LMF) network element, or a second terminal, comprising:
receiving indication information sent by a first terminal, wherein the indication information is sent by the first terminal in the case that an SL positioning reference signal (PRS) to be received is not measured in an SL positioning procedure.

13. The method of claim 12, wherein the SL PRS to be received comprises an SL PRS sent by an anchor terminal, in the case that the first terminal does not detect any SL PRS sent by the anchor terminal, the indication information indicates that no anchor terminal is capable of being measured or that no SL PRS is capable of being measured.

14. The method of claim 12, wherein the SL PRS to be received comprises an SL PRS sent by an anchor terminal, in the case that the first terminal does not detect SL PRSs sent by some anchor terminals, the indication information indicates that the some anchor terminals are not capable of being measured or that some SL PRSs are not capable of being measured.

15. The method of claim 12, wherein the SL PRS to be received comprises an SL PRS sent by a target terminal, in the case that the first terminal does not detect the SL PRS sent by the target terminal, the indication information indicates that the target terminal is not capable of being measured or that the SL PRS is not capable of being measured.

16. The method of claim 12, wherein in case of lack of SL PRS configuration information in the first terminal, the indication information indicates that there is no SL PRS configuration information.

17. The method of any one of claims 12 to 16, wherein the SL PRS to be received not being measured in the SL positioning procedure comprises at least one of:
not enough SL PRSs being received in an SL-time difference of arrival (TDOA) positioning procedure; or
not enough SL PRSs being received in an SL-angle of arrival (AOA) positioning procedure.

18. The method of claim 12, further comprising:
receiving a measurement result reported by the first terminal, wherein the measurement result is obtained by measuring measurable SL PRSs in the case that there are some measurable SL PRSs in the first terminal.

19. A communication apparatus, comprising:
a transceiver module, configured to in response to an SL positioning reference signal (PRS) to be received not being measured in an SL positioning procedure, send indication information to a base station; or send indication information to a location management function (LMF) network element; or send indication information to a second terminal.

20. A communication apparatus, comprising:
a transceiver module, configured to receive indication information sent by a first terminal, wherein the indication information is sent by the first terminal in the case that an SL positioning reference signal (PRS) to be received is not measured in an SL positioning procedure.

21. A communication device, comprising a processor and a memory for storing a computer program, wherein when the computer program stored in the memory is executed by the processor, the device is caused to implement the method of any one of claims 1 to 11, or to implement the method of any one of claims 12 to 18.

22. A communication device, comprising: a processor and an interface circuit; wherein
the interface circuit is configured to receive code instructions and transmit the code instructions to the processor; and
the processor is configured to run the code instructions to implement the method of any one of claims 1 to 11, or to implement the method of any one of claims 12 to 18.

23. A computer readable storage medium for storing instructions, wherein when the instructions are executed, the method of any one of claims 1 to 11 is implemented, or the method of any one of claims 12 to 18 is implemented.
